# EUROPEAN PATENT APPLICATION

(11) **EP 4 843 878 A1**
(43) Date of publication of application: **25.11.2026**
(21) Application number: 26157039.4
(22) Date of filing: 06.02.2026
(51) Int. Cl.: B62K 21/12

(54) **HANDLEBAR AND BICYCLE**

(30) Priority: 21.05.2025 TW 114205120 U
(71) Applicant: Giant Manufacturing Co., Ltd., Xitun Dist., Taichung City 407727 (TW)
(72) Inventor: KANG, Hsien-Chang, 407727 Taichung City (TW); CHEN, Kai-Hsin, 407727 Taichung City (TW); LIN, Chia-Wei, 407727 Taichung City (TW); LI, Yang-Sheng, 407727 Taichung City (TW); HUANG, Bo-Hao, 407727 Taichung City (TW)
(74) Representative: Adamson Jones

(57) **Abstract**

A handlebar comprises a middle bar segment, a first handlebar segment, a second handlebar segment, and a stem. The central segment includes a central groove and a locking portion. The first handlebar segment extends from the central segment toward a first direction and includes a first groove communicated with the central groove. The second handlebar segment extends from the central segment toward a second direction opposite to the first direction and includes a second groove communicated with the central groove. The stem includes a budling groove communicated with the central groove and a body connected to the middle handlebar segment.

## Description

### CROSS-REFERENCE TO RELATED APPLICATION

This application claims priority from Taiwan Patent Application No. 114205120 filed on May 21, 2025, which are hereby incorporated herein by reference in its entirety.

### BACKGROUND OF THE INVENTION

### 1. Field of the Invention

This disclosure relates to the structure of a handlebar tube for bicycles.

### 2. Description of Related Art

Common control cables used in bicycles or electric bicycles, such as brake cables, gear shift cables, or power cables for lights, are exposed to the external environment unless they are routed and hidden inside the handlebar tube. When these cables are exposed to sunlight and rain for a long time, they tend to easily age, rust, or even break. Furthermore, multiple exposed cables can cause a messy appearance and may not be aerodynamic, which is particularly undesirable for racing bicycles.

The design where cables are placed inside the tube of an integrated handlebar (or one-piece) can achieve better aerodynamic performance and aesthetic appearance compared to traditional handlebars. However, there are still two main issues that need to be addressed. First, the narrow internal space of the tube makes it difficult to perform maintenance or use tools. Second, the limited internal room can cause the cables to bend excessively as they pass through the curved sections of the tube, leading to poor cable routing.

Additionally, some bicycle manufacturers have attempted to form a groove on the underside of the handlebar tube to accommodate most of the cables within this limited-depth groove. However, this design still has several issues that need to be resolved. When cables are embedded in the groove on the underside of the handlebar, the shallow depth of the groove can cause the cables to bend too sharp at an angle, leading to poor cable routing and excessive tension, making it difficult to secure the cables within the groove. As a result, additional auxiliary mechanisms or components are required to prevent the cables from popping out. If the groove is too deep, it can compromise the strength of the handlebar, necessitating a thicker design that increases the weight. Alternatively, to provide sufficient room for cable routing, the height of the handlebar stem is increased, which affects the design of the lowest handlebar position and reduces the efficiency of cycling.

In addition, the irregular tubular shape of the integrated handlebar makes it difficult to use common handlebar mounting accessories, which are typically designed to fit around a standard handlebar. As a result, it is challenging to install accessories such as speedometers, action cameras, and mobile phones on the handlebar. If the structural strength issues caused by deep grooves can be resolved, and a mount for accessories can be integrated, it would clearly be a valuable area of research and development for bicycle manufacturers.

### SUMMARY OF THE INVENTION

In some embodiments, a handlebar comprises: a central segment including a central groove and a locking portion; and a first handlebar segment, extending from the central segment in a first direction, including a first groove that communicates with the central groove; a second handlebar segment, extending from the central segment in a second direction opposite to the first direction, including a second groove that communicates with the central groove; and a stem, including a bundling groove that communicates with the central groove and a body connected to the central segment.

In some embodiments, the handlebar further comprises an accessory mounting seat, which includes: a cover portion, covering the central groove; a connecting portion, connected to the cover portion, used for fixation to the locking portion; and a base portion, extending outward from the connecting portion to the central segment, including at least one holding member.

In some embodiments, the first groove has a first depth, and the second groove has a second depth, wherein the first depth is greater than depths at other positions within the first groove, and the second depth is greater than depths at other positions within the second groove. In some embodiments, a middle section of the central groove has a third depth, which is respectively smaller than the first depth and the second depth. In some embodiments, a depth of each of first groove and the second groove ranges from 9 mm to 25 mm. In some embodiments, a width of each of the first groove and the second groove ranges from 13 mm to 16 mm. In some embodiments, the first depth, the second depth, and the third depth form an M-shaped or m-shaped groove relative to a bottom surface of the handlebar. That is, the first depth, the second depth, and the third depth define a stepped groove having alternating raised and recessed portions relative to the bottom surface of the handlebar.

In some embodiments, the handlebar further comprises an accessory mounting seat, which includes: a cover portion, covering the central groove; a connecting portion, connected to the cover portion, used for fixation to the locking portion; and a base portion, extending outward from the connecting portion to the central segment, including at least one holding member. In some embodiments, the locking portion is adjacent to the central groove and includes a mating region and a locking hole, wherein the connecting portion is fixed to the locking portion by inserting at least one fastening member into the locking hole and the connecting portion abuts the mating region. In some embodiments, the cover portion includes a base portion and two wing portions extending from the base on opposite sides, and the two wing portions respectively abut the inner walls of the first groove and the second groove. In some embodiments, the two wing portions form an obtuse angle with the base. In some embodiments, the stem further comprises a wire holder, the wire holder including a tube and a decorative cover, wherein the tube is disposed within the body of the stem, and the decorative cover shelters the wire holder. In some embodiments, the handlebar can be a curved handlebar or a flat handlebar.

In some embodiments, a bicycle, comprises: a bicycle frame including a head tube; a handlebar, comprising: a central segment with a central groove and a locking portion; a first handlebar segment extending from the central segment in a first direction, including a first groove that communicates with the central groove; a second handlebar segment extending from the central segment in a second direction opposite to the first direction, including a second groove that communicates with the central groove; and a stem pivoted to the head tube, including a bundling groove that communicates with the central groove and a body connected to the central segment.

In some embodiments, he bicycle further includes a first cable and a second cable, where the first cable is disposed within the first groove, the central groove, and the bundling groove, and the second cable is disposed within the second groove, the central groove, and the bundling groove.

### BRIEF DESCRIPTION OF DRAWINGS

In order to sufficiently understand the essence, advantages and the preferred embodiments of the present invention, the following detailed description will be more clearly understood by referring to the accompanying drawings.
FIG. 1 is a schematically perspective diagram showing a bicycle according to some embodiments, which has an integrated accessory mounting seat on the curved handlebar.
FIG. 2A is a schematically perspective diagram showing the handlebar with the integrated accessory mounting seat according to some embodiments.
FIG. 2B is an exploded perspective view of FIG. 2A, showing the handlebar with the integrated accessory mounting seat according to some embodiments.
FIG. 3 is a top view of a handlebar, showing the bottom surface of the handlebar without the cable and the accessory mounting seat.
FIG. 4 is a cross-sectional view of FIG. 2A, showing the variations in depth of the central groove, the first groove, and the second groove according to some embodiments.
FIG. 5 is a perspective view showing the variations in width of the central groove, the first groove, and the second groove on a flat handlebar according to some embodiments.
FIG. 6 is a perspective view showing a part of the bicycle with the flat handlebar as described in FIG. 5.

### DETAILED DESCRIPTION OF THE INVENTION

The embodiments will now be described in detail with reference to the accompanying drawings, which are disclosed in this document. The embodiments described herein are examples related to bicycle handlebars and bicycles, but they are not intended to limit the scope of the disclosure.

The terms used in this specification have their ordinary meanings in the field and in the specific context in which each term is used. The use of examples in this specification, including any term discussed herein, is for illustrative purposes only and is not intended to limit the scope or meaning of the disclosure or any example term. Similarly, the disclosure is not limited to the various embodiments described in this specification.

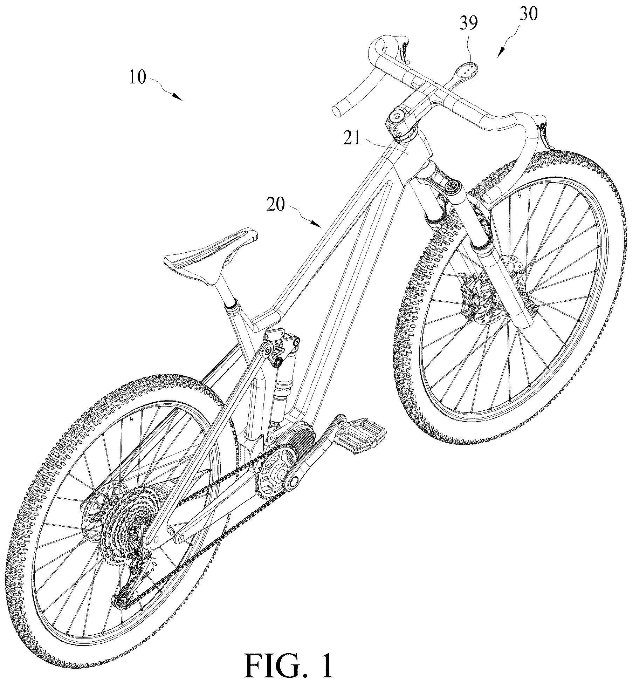

FIG. 1 shows a bicycle with an integrated accessory mounting seat on the handlebar. The bicycle 10 includes a bicycle frame 20 and a handlebar 30 (which is a curved handlebar in this embodiment) with an integrated accessory mounting seat 39. The handlebar is pivotally connected to the head tube 21 of the bicycle frame 20. Common control cables used in the bicycle 10, such as brake cables, gear shift cables, or power control cables for lights, can be hidden in the grooves on the underside of the handlebar 30, not only achieving a neat appearance but also reducing wind resistance during racing.

In different embodiments, the bicycle 10 can be an electric bicycle, which can be self-powered, hybrid, fully electric, or operate in a mixed mode to provide a riding experience for users.

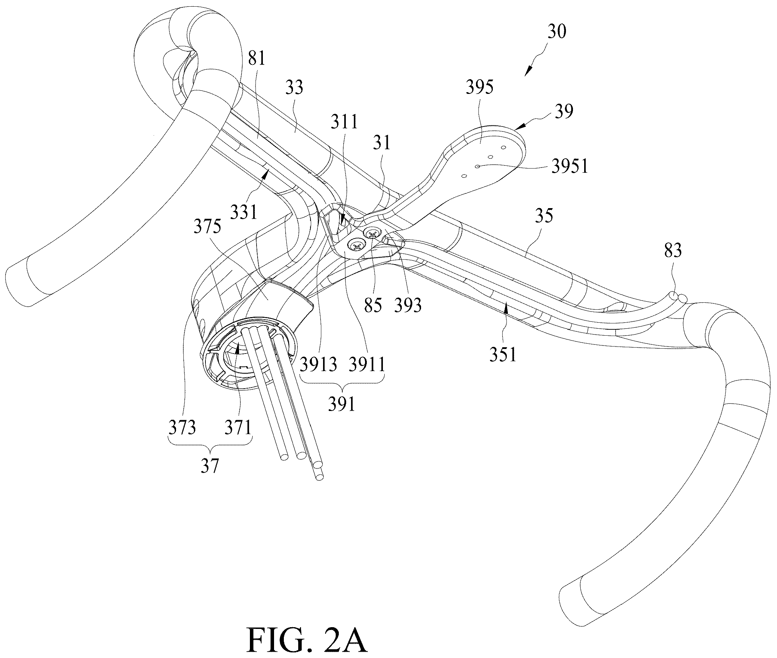

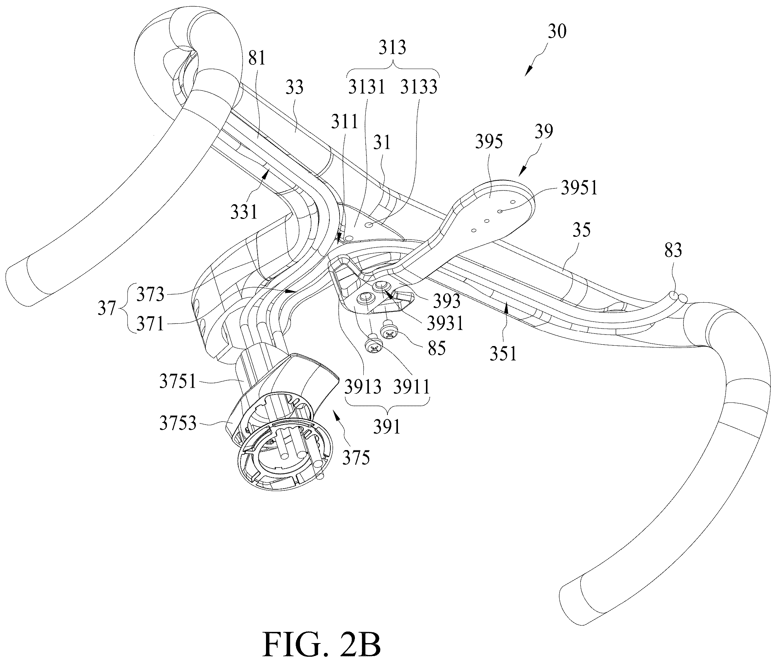

As shown in the top view taken from the front part of the bicycle 10 in FIG. 1, and in FIGS. 2A and 2B (which is an exploded view of FIG. 2A), the first control cable 81 and the second control cable 83 are embedded in the grooves on the underside of the handlebar 30. The handlebar 30 includes a central segment 31, a first handlebar segment 33, a second handlebar segment 35, a stem 37, and an accessory mounting seat 39. The first control cable 81 passes through the first groove 331 of the first handlebar segment 33, the central groove 311 of the central segment 31, and the bundling groove 371 of the stem 37. Similarly, the second control cable 83 passes through the second groove 351 of the second handlebar segment 35 and the central groove 311 of the central segment 31, and then joins the first control cable 81 in the bundling groove 371 of the stem 37, before entering the bicycle frame 20 via the head tube 21. The bundling groove 371 is defined by the inner wall of the body 373 of the stem 37.

Referring again to FIGS. 2A and 2B, the accessory mounting seat 39 includes a cover portion 391, a connecting portion 393, and a base portion 395. The cover portion 391 is positioned over the central grooves 311 to hold the first cable 81 and the second cable 83 within the central groove 311. The connecting portion 393 is connected to the cover portion 391 and includes at least one hole 3931 (or a counterbore), through which a screw 85 (or a fastener) can pass to secure the accessory mounting seat 39 to the locking portion 313 of the central segment 31. However, the fastening means in this embodiment is just illustrative, and other designs such as clips or snap-fit structures can also be introduced. The cover portion 391 includes a base 3911 and two wing portions 3913 extending from the opposite sides of the base 3911. The two wing portions 3913 respectively abut the inner walls of the first groove 331 and the second groove 351, thereby more securely attaching the accessory mounting seat 39 to the central segment 31 and providing a decorative effect. In this embodiment, the two wing portions 3913 form an obtuse angle with the base 3911, meaning they are not in the same plane relatively as the base 3911. The base portion 395 extends forward from the connecting portion 393, away from the central segment 31, and includes at least one retention member, which in this embodiment is a plurality of retention holes 3951, for mounting or securing accessories such as a cycling stopwatch, action camera, or mobile phone.

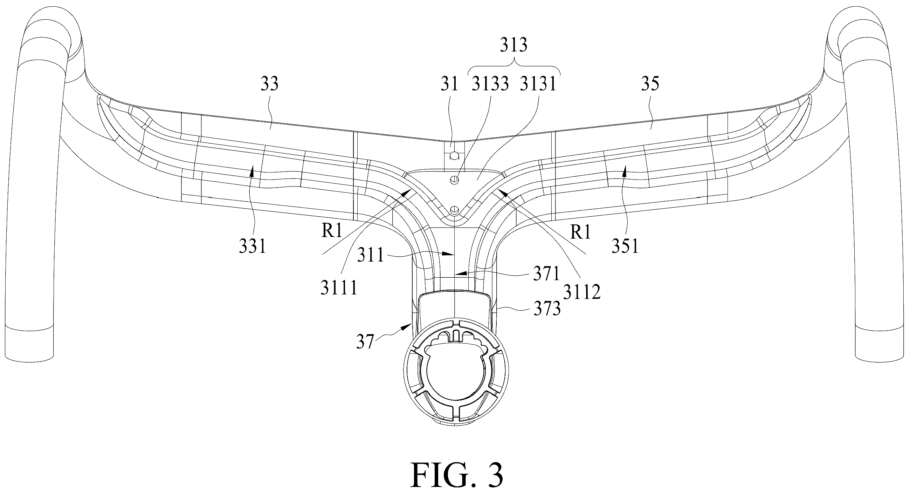

FIG. 3 shows a top view of the handlebar without the cables and the accessory mounting seat. The central segment 31 includes the central groove 311 and a locking portion 313 adjacent to the central groove 311. The locking portion 313 includes a mating region 3131 and a locking hole 3133. The connecting portion 393 is fixed to the locking portion 313 by inserting at least one screw 85 (or a fastener) through the locking hole 3133 and the through hole 3931 in the connecting portion 393, thereby the connecting portion 393 abutting the mating region 3131. The two wing portions 3913 are configured to cover the first groove 331 and the second groove 351, thereby preventing the cables from disengaging from the grooves. The base 3911 is secured to the mating region 3131 by the screw 85, such that the two wing portions 3913 function solely as a cover rather than a fastening component. Accordingly, the two wing portions 3913 may be formed with hollow sections to reduce material usage and minimize overall weight.

In this embodiment, the mating region 3131 is a recessed area with a depth less than that of the adjacent central recess 311. The two side walls (3111, 3112) of the central groove 311 are located on opposite sides of the V-shaped mating region 3131. The two side walls (3111, 3112) may have arcuate surfaces with a radius R1, which allows smoother bending of the cable routing and facilitates guiding the cables toward the bundling groove 371 for easier directional transition.

The first handlebar segment 33 extends from the central segment 31 in a first direction (the right hand side of the rider) and includes a first groove 331 that communicates with the central groove 311. The second handlebar segment 35 extends from the central segment 31 in a second direction opposite to the first direction (the left hand side of the rider), and includes a second groove 351 that communicates with the central groove 311. The stem 37 includes a bundling groove 371 that communicates with the central groove 311 and a body 373 that connects to the central segment 31. The stem 37 also includes a wire holder 375, which comprises a tube 3751 and a decorative cover 3753. The tube 3751 is disposed inside the body 373 of the stem 37, and the decorative cover 3753 covers the bundling groove 371.

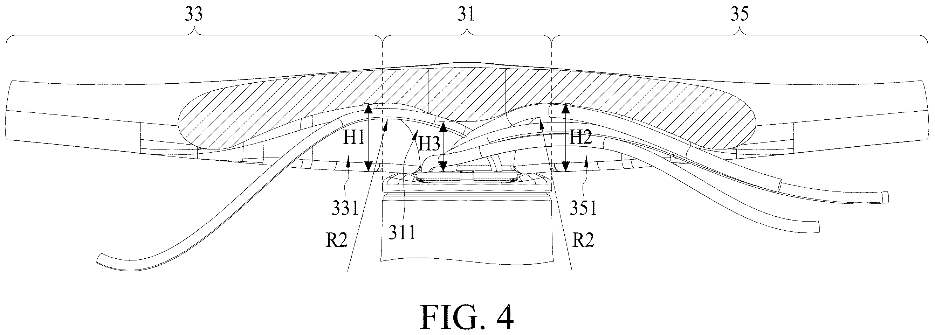

FIG. 4 is a cross-sectional view of FIG. 2A, showing the variations in depth of the central groove, the first groove, and the second groove according to some embodiments. The first groove 331 has a first depth H1 at the first intersection or a section near the first intersection with the central groove 311, depending on the length ratio of the first handle segment 33 and the central segment 31. The second groove 351 has a second depth H2 at the second intersection or a section near the second intersection with the central groove 311, depending on the length ratio of the second handle segment 35 and the central segment 31. The depth refers to the vertical distance from the bottom to the top of the groove (the bottom surface of the handlebar). The first depth H1 is greater than the depth at other positions within the first groove 331, and the second depth H2 is greater than the depth at other positions within the second groove 351. The central groove 311 has a third depth H3 at its midpoint, which is less than both the first depth H1 and the second depth H2. Due to the symmetrical design of the handlebar's tube structure, the first depth H1 and the second depth H2 are equal. The range of the first depth H1 and the second depth H2 is greater than 9 mm and less than 25 mm. The first depth H1, the second depth H2, and the third depth H3 form an M-shaped or m-shaped groove relative to the bottom surface of the handlebar, and the variation in depth allows for smooth routing of cables without additional fasteners. In short, the first depth H1, the second depth H2, and the third depth H3 define a stepped groove having alternating raised and recessed portions relative to the bottom surface of the handlebar. The shallower sections of the grooves also help to maintain the structural strength and lightweight nature of the handlebar. The first depth H1 and the second depth H2 being greater than 9 mm allow for a larger bending radius R2 for the cables, facilitating smoother routing and overcoming the issue of difficult cable routing due to too small a radius and high cable tension.

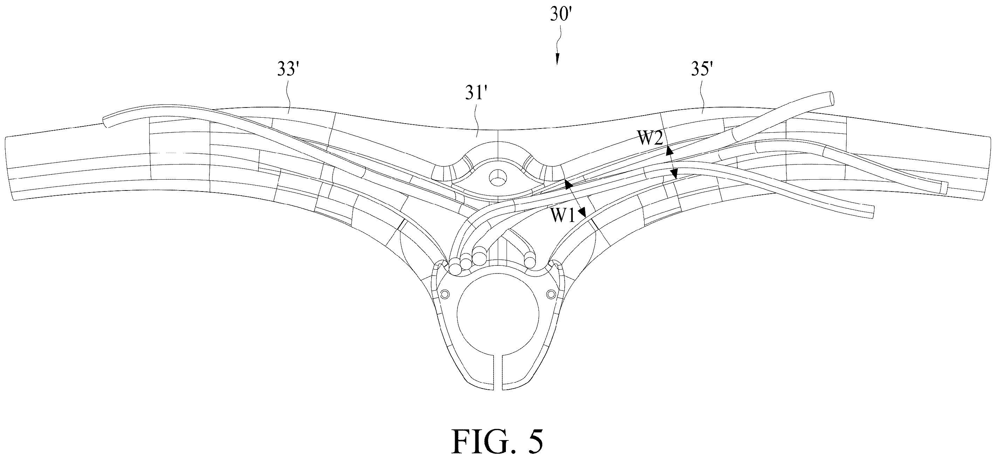

FIG. 5 shows the variations in the width of the central groove, the first groove, and the second groove of a flat-bar handle. The handle 30' includes a central segment 31', a first grip segment 33', a second grip segment 35', and a stem 37'. The width range of the first groove 331 and the second groove 351 is greater than 13mm and less than 16mm. A width W2 of approximately 13mm can accommodate three cables buried within the corresponding groove, while a width W1 of approximately 16mm allows for a larger bend radius R for the cable routing, facilitating smoother entry into the stem 37'.

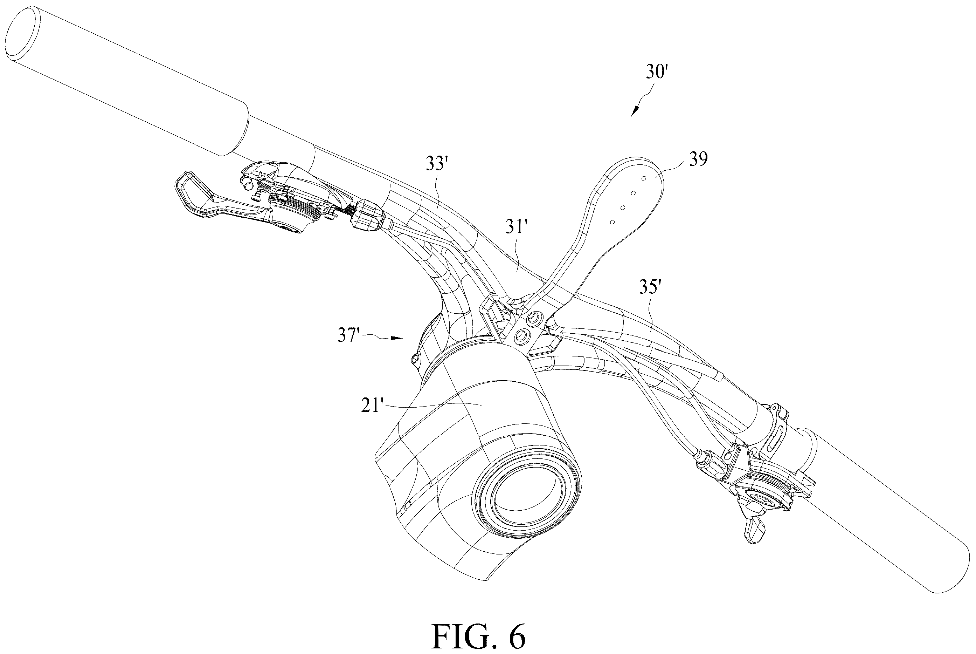

FIG. 6 shows a portion of a bicycle with a flat handlebar as described in FIG. 5. The stem 37' is pivoted to the head tube 21' below the handlebar 30'. The depth of the lower grooves is sufficient to hide the entire cable routing, providing enough space for the cables to enter the head tube 21' directly without the need for a decorative cover 3753, thus offering a lower profile and enhancing the riding efficiency.

The foregoing outlines features of several embodiments or examples so that those skilled in the art may better understand the aspects of the present disclosure. Those skilled in the art should appreciate that they may readily use the present disclosure as a basis for designing or modifying other processes and structures for carrying out the same purposes and/or achieving the same advantages of the embodiments or examples introduced herein. Those skilled in the art should also realize that such equivalent constructions do not depart from the spirit and scope of the present disclosure, and that they may make various changes, substitutions, and alterations herein without departing from the spirit and scope of the present disclosure.

## Claims

1. A handlebar (30, 30'), comprising:
a central segment (31, 31') including a central groove (311); and
a first handlebar segment (33, 33'), extending from the central segment (31, 31') in a first direction, including a first groove (331) that communicates with the central groove (311);
a second handlebar segment (35, 35'), extending from the central segment (31, 31') in a second direction opposite to the first direction, including a second groove (351) that communicates with the central groove (311); and
a stem (37, 37'), including a bundling groove (371) that communicates with the central groove (311) and a body (373) connected to the central segment (31, 31').

2. The handlebar (30, 30') of claim 1, wherein the first groove (331) has a first depth (H1), and the second groove (351) has a second depth (H2), wherein the first depth (H1) is greater than depths at other positions within the first groove (331), and the second depth (H2) is greater than depths at other positions within the second groove (351),
wherein a width of the central segment (31, 31') measured along the first direction or the second direction substantially corresponds to a width of the stem (37, 37').

3. The handlebar (30, 30') of claim 2, wherein a middle section of the central groove (311) has a third depth (H3), which is respectively smaller than the first depth (H1) and the second depth (H2).

4. The handlebar (30, 30') of claim 1 or 2, wherein a depth of each of first groove (331) and the second groove (351) ranges from 9 mm to 25 mm.

5. The handlebar (30, 30') of claim 1 or 2, wherein a width of each of the first groove (331) and the second groove (351) ranges from 13 mm to 16 mm.

6. The handlebar (30, 30') of claim 3, wherein the first depth (H1), the second depth (H2), and the third depth (H3) define a stepped groove having alternating raised and recessed portions relative to a bottom surface of the handlebar (30, 30').

7. The handlebar (30, 30') of any preceding claim, further comprising an accessory mounting seat (39), which includes:
a cover portion (391), covering the central groove (311);
a connecting portion (393), connected to the cover portion (392), used for fixation to a locking portion (313) disposed in the central segment (31, 31'); and
a base portion (395), extending outward from the connecting portion (393) to the central segment (31, 31'), including at least one holding member (3951).

8. The handlebar (30, 30') of claim 7, wherein the locking portion (313) is adjacent to the central groove (311) and includes a mating region (3131) and a locking hole (3133), wherein the connecting portion (393) is fixed to the locking portion (313) by inserting at least one fastening member (85) into the locking hole (3133) and the connecting portion (393) abuts the mating region (3131).

9. The handlebar (30, 30') of claim 7, wherein the cover portion (391) includes a base portion (3911) and two wing portions (3913) extending from the base (3911) on opposite sides, and the two wing portions (3913) respectively abut inner walls of the first groove (331) and the second groove (351).

10. The handlebar (30, 30') of claim 9, wherein the two wing portions (3913) each form an obtuse angle with the base member (3911).

11. The handlebar (30, 30') of any preceding claim, wherein the stem (37, 37') further comprises a wire holder (375), the wire holder (375) including a tube (3751) and a decorative cover (3753), wherein the tube (3751) is disposed within the body (373) of the stem (37, 37'), and the decorative cover (3753) shelters the wire holder (375), wherein the bundling groove (371) is defined by an inner wall of the body (373) of the stem (37, 37').

12. The handlebar (30, 30') of claim 3, wherein the first depth (H1), the second depth (H2), and the third depth (H3) form an M-shaped or m-shaped groove relative to a bottom surface of the handlebar (30, 30').

13. The handlebar (30, 30') of any preceding claim, wherein side walls (3111, 3112) of the central groove (311) have arcuate surfaces with a radius (R1) to guide control cables (81, 83) toward the bundling groove (371).

14. The handlebar (30, 30') of any preceding claim, wherein the handlebar (30, 30') is selected from a curved handlebar (30) and a flat handlebar (30').

15. The handlebar (30, 30') of claim 9, wherein each wing portion (3913) forms an obtuse angle with the base (3911).
